# NEUE EUROPÄISCHE PATENTSCHRIFT

(11) **EP 1 930 211 B2**
(45) Veröffentlichungstag und Bekanntmachung des Hinweises auf die Entscheidung über den Einspruch: **15.01.2020**
(45) Hinweis auf die Patenterteilung: 13.04.2016
(21) Anmeldenummer: 07023584.1
(22) Anmeldetag: 05.12.2007
(51) Int. Cl.: B60P 3/20, B60H 1/00

(54) **Nutzfahrzeugaufbau und Nutzfahrzeug mit einem derartigen Aufbau**
Commercial vehicle superstructure and commercial vehicle with such a superstructure
Structure de véhicule utilitaire et véhicule utilitaire doté d'une telle structure

(30) Priorität: 06.12.2006 DE 102006057599
(43) Veröffentlichungstag der Anmeldung: 11.06.2008
(73) Patentinhaber: Kögel Trailer GmbH & Co. KG, 89349 Burtenbach (DE)
(72) Erfinder: Lima, Joachim, 89601 Schelklingen (DE)
(74) Vertreter: Meissner Bolte Partnerschaft mbB

(56) Entgegenhaltungen:
- EP-A- 1 122 191
- WO-A-88/02705
- WO-A-2006/104491
- WO-A1-2005/113311
- CA-A1- 2 452 416
- DE-A1- 10 029 355
- DE-A1- 19 831 787
- DE-U1- 29 712 740
- GB-A- 2 282 873
- JP-A- 11 201 618
- US-A1- 2005 215 189

## Beschreibung

Die Erfindung bezieht sich auf einen Nutzfahrzeugaufbau mit den Merkmalen des Oberbegriffs des Anspruchs 1. Die Erfindung bezieht sich ferner auf ein Nutzfahrzeug mit einem derartigen Aufbau. Siehe JP 11 201618 A.

Für den Transport von verderblichen Lebensmitteln, die tiefgekühlt in der Kette von Erzeuger, Verarbeiter und Verkäufer transportiert werden müssen, wie auch für den Transport von kälteempfindlichen Waren, sind isolierte Kofferaufbauten bekannt. Die von der Kühlmaschine gelieferte gekühlte Luft wird aus einer Austrittöffnung ins Innere des Aufbaus geblasen. Dabei kommt es darauf an, dass ein möglichst gleichmäßiges Temperaturprofil über die gesamte Aufbaulänge und -breite eingestellt werden kann.

Dazu wird die Kühlluft entweder in einzelne Luftschläuche bzw. Kanäle oder auf ein unter dem Dach des Aufbaus gespanntes Tuch geblasen, wodurch eine möglichst gleichmäßige Verteilung der Kühlluft im Frachtraum erreicht wird.

Ein Beispiel für die letztere Konstruktion ist in der DE 100 29 355 A1 gegeben, die auf die Anmelderin zurückgeht. Darin ist ein isolierter Kofferaufbau beschrieben, in dessen Vorderwand ein Kühlaggregat integriert ist. Das Kühlaggregat saugt Luft aus dem Frachtraum an, kühlt diese und bläst dann die gekühlte Luft in Dachnähe auf ein unter das Dach gespannte Tuch bzw. Segel. Damit wird vermieden, dass die kalte Luft in der Nähe des Kühlaggregats, d.h. im vorderen Bereich des Aufbaus nach unten sinkt und eine ausreichende Menge an Kühlluft in den hinteren Bereich des Aufbaus gelangt. Durch das unter das Dach des Aufbaus gespannte Segel wird die Luft zum hinteren Ende des Aufbaus, sowie zu den Seiten hin abgelenkt bzw. geführt. Die an den Seitenwänden bzw. der Rückwand des Aufbaus nach unten sinkende Luft strömt in Bodennähe zur Vorderwand zurück und wird dort vom Kühlaggregat angesaugt. Dadurch entsteht ein Kühlluftkreislauf, der zu einer verbesserten Temperaturverteilung im Frachtraum führt.

Aufgrund von Verwirbelungen verliert die Kühlluft allerdings an Geschwindigkeit, so dass die zur Verfügung stehende Kühlluftmenge nicht ausreichend über die Frachtraumlänge bis zur Rückwand gelangt.

Ein anderes Beispiel für einen isolierten Kofferaufbau mit Kühlluftzirkulation ist in der DE 86 30 333 U1 offenbart, die ebenfalls auf die Anmelderin zurückgeht.

Dieser Kofferaufbau weist anstelle des unter dem Dach gespannten Tuches mehrere Kühlluftkanäle auf, die am Dach des Aufbaus zwischen Aufhängerohren befestigt sind und Öffnungen an deren Unterseite aufweisen, durch die die Kühlluft nach unten in den Frachtraum absinken kann. Bei diesem Kühlluftsystem ist eine Platte an der Vorderwand mit einem Spalt angeordnet, durch den Luft aus dem Frachtraum angesaugt und zum Kühlaggregat geleitet wird. Die Unterkante der Platte ist dabei vom Boden beabstandet, so dass die Luft über die gesamte Plattenbreite in den Spalt einströmt.

Die Platte bildet somit einen nach unten verlaufenden Führungskanal, der seitlich offen ist. Beim Ansaugen verwirbelt die Luft hinter der Platte, wodurch es zu Ansaugverlusten kommt.

Ein Beispiel für einen gattungsgemäßen Nutzfahrzeugaufbau mit Kühlsystem ist in der DE 297 12 740 U1 offenbart. Bei dieser Anordnung ist ein Luftverteiler vorgesehen, der von einem Kühlaggregat mit Luft versorgt wird. An den Luftverteiler sind Luftkanalplanenstreifen zur Bildung von Luftkanälen angeschlossen, die unter dem Dach des Frachtraumes befestigt sind. Durch die damit gebildeten Luftkanäle wird die Kühlluft im Frachtraum verteilt. Zum Aufbau des Luftverteilers ist der vorstehend genannten Druckschrift nur zu entnehmen, dass dieser zwei Austrittsöffnungen aufweist, an die zwei Luftkanäle angeschlossen sind. Das bedeutet, dass die Versorgung des Frachtraums mit Kühlluft nur durch zwei Kühlkanäle erfolgt. Eine gleichmäßige Verteilung der Kühlluft bis zu den Seitenwänden ist mit diesem Kühlsystem nicht möglich.

Der Erfindung liegt die Aufgabe zugrunde, einen Nutzfahrzeugaufbau anzugeben, der eine Luft- oder Gasführung mit möglichst geringen Strömungsverlusten ermöglicht. Ferner soll mit der Erfindung ein Nutzfahrzeug mit einem derartigen Aufbau angegeben werden.

Erfindungsgemäß wird diese Aufgabe durch einen Nutzfahrzeugaufbau gemäß Anspruch 1, sowie durch ein Nutzfahrzeug gemäß Anspruch 12 gelöst.

Die Erfindung beruht auf dem Gedanken, einen Nutzfahrzeugaufbau mit einem Luft- oder Gasfördermittel vorzusehen, das einen Eintrittsbereich und einen Austrittsbereich aufweist, wobei dem Austrittsbereich ein Luftverteiler und diesem eine Luftaustrittseinrichtung nachgeordnet ist. Erfindungsgemäß weist der Luftverteiler mehrere Verteilerkanäle auf, die fächerartig mit der Luftaustrittseinrichtung verbunden sind.

Die Verteilerkanäle bieten die Voraussetzung dafür, dass die Luft, bzw. das Gas, insbesondere die Kühlluft über die gesamte Breite des Aufbau oder zumindest über einen großen Teil der Aufbaubreite verteilt wird, ohne dass es dabei zu Verlusten aufgrund von Luftverwirbelungen kommt. Damit wird im Fall eines Kühlaggregates als Fördermittel dessen Kühlleistung besser ausgenutzt und gleichzeitig ein weitgehend homogenes Temperaturprofil im Frachtraum eingestellt, da eine Förderung der Luft bis zum rückwärtigen Ende des Aufbaus durch die verringerten Strömungsverluste begünstigt wird.

Es versteht sich, dass die Erfindung nicht auf die Verteilung von Kühlluft bzw. die Verwendung eines Kühlaggregates eingeschränkt ist, sondern auch die Verteilung von Warmluft bzw. die Verwendung eines Heizaggregates umfasst. Das erfindungsgemäße Prinzip kann generell auf Aufbauten angewandt werden, bei denen es auf eine möglichst verlustfreie Förderung von Luft oder Gas in den Frachtraum ankommt. Beispielsweise kann dies die Förderung von Reifungsgasen oder die Reifung verzögernden Gasen, wie beispielsweise Stickstoff, umfassen. Als Fördermittel kann ein Ventilator eingesetzt werden, wenn eine Klimatisierung der Luft nicht erforderlich ist.

In diesem Zusammenhang wird darauf hingewiesen, dass der Ausdruck "Luftverteiler" bzw. "Luftaustrittseinrichtung" diese Bauteile nicht auf die Förderung von Luft einschränkt. Vielmehr sind diese Bauteile auch zur Förderung von Gas geeignet. Der Einfachheit halber wird nachfolgend nur auf die Förderung von Luft Bezug genommen, wobei die Förderung von Gasen mitumfasst ist.

Bei der Erfindung sind die Verteilerkanäle fächerartig, d. h. in Form eines Fächers mit sich ändernden Kanalquerschnitten, im Luftverteiler angeordnet, wodurch die Luft, insbesondere die Kühlluft gezielt auf unterschiedliche Kanäle bzw. allgemein unterschiedliche Bereiche der Luftaustrittseinrichtung verteilt wird.

Dabei genügt es, wenn die Verteilerkanäle wenigstens in einem Auslassbereich des Luftverteilers angeordnet sind, wodurch die Herstellung vereinfacht wird. Eine besonders einfache Herstellung ergibt sich, wenn ein Einlassbereich des Luftverteilers einbautenfrei ist.

Es ist auch möglich, die Verteilerkanäle über die gesamte Länge des Luftverteilers (in Strömungsrichtung) anzuordnen. Die Anordnung bzw. Erstreckung der Verteilerkanäle über die gesamte Länge ist besonders bevorzugt, da durch eine sichere Aufteilung des Luftstromes/Gasstromes in mehrere Teilströme und somit eine gute Auffächerung des Luftstromes/Gasstromes in Querrichtung des Aufbaus bewirkt wird.

Bei einer weiteren Ausführungsform ist die horizontale Erstreckung des Luftverteilers auslassseitig größer als einlassseitig. Das bedeutet, dass der Luftverteiler an die Austrittsmaße des Fördermittels angepasst ist (Einlassseite des Luftverteilers). Auf der gegenüberliegenden Seite (Auslassseite) ist der Luftverteiler breiter ausgebildet, d.h. die horizontale Erstreckung ist größer und kann an die Breite des Aufbaus angepasst sein. Damit ergibt sich ein günstiger Übergang vom Fördermittel auf die Luftaustrittseinrichtung.

Ferner kann die vertikale Erstreckung des Luftverteilers auslassseitig kleiner als einlassseitig sein. Das bedeutet, dass der Luftverteiler auf der Anschlussseite zum Fördermittel höher baut, als auf der Auslassseite, die mit der Luftaustrittseinrichtung verbunden ist. Dadurch erfolgt ein strömungstechnisch günstiger Übergang vom Fördermittel auf die Luftaustrittseinrichtung.

Der Luftverteiler kann ein doppelt gekrümmtes Seitenprofil aufweisen, wodurch unterschiedliche Höhenlagen des Austrittsbereiches des Fördermittels und der Luftaustrittseinrichtung überbrückt werden, ohne dass dabei signifikante Strömungsverluste auftreten.

Bei einer weiteren bevorzugten Ausführungsform weist die Luftaustrittseinrichtung mehrere Austrittskanäle mit Austrittsöffnungen auf, wobei die Austrittsöffnungen in den seitlichen Austrittskanälen schräg angeordnet sind. Dadurch wird eine günstige Anströmung der Seitenwände des Aufbaus erreicht, so dass die in diesem Bereich absinkende Kühlluft an den Seitenwänden entlang geleitet wird.

Um eine möglichst gleichmäßige Verteilung der Luft bzw. des Gases, insbesondere der Kühlluft über die gesamte Aufbaulänge zu erreichen, steigt der Durchmesser der Austrittsöffnung mit zunehmendem Abstand vom Luftverteiler.

Erfindungsgemäß ist der Eintrittsbereich des Luft- oder Gasfördermittels mit einem Rückführsystem dicht verbunden, das seitlich geschlossen ist. Dieses hat den Vorteil, dass die Rückluft gesammelt dem Fördermittel zugeführt wird, ohne dass es dabei zu nennenswerten Ansaugverlusten kommt. Ein Entweichen der Rückluft aus dem Rückführsystem nach oben sowie ein übermäßig starkes Ansaugen von Rückluft in der unmittelbaren Nähe des Aggregats wird daher im Wesentlichen vermieden.

Für die Dichtigkeit des Rückführsystems genügt es, dass keine nennenswerten Rückluftmengen entweichen können. Eine hermetische Abdichtung des Systems ist nicht erforderlich.

Die seitlich geschlossene Ausführung des Rückführsystems bedeutet, dass das Rückführsystem in Längsrichtung des Aufbaues bzw. im Wesentlichen senkrecht zur Vorderwand abgeschlossen ist. Die seitlich geschlossene Anordnung muss nicht dicht sein. Vielmehr ist es möglich, dass der Seitenbereich des Rückführsystems an mehreren diskreten Stellen einzelne Öffnungen, beispielsweise Bohrungen aufweist.

Das Rückführsystem weist mehrere im Wesentlichen senkrecht angeordnete Leitkanäle auf, die mit dem Eintrittsbereich des Luft- oder Gasfördermittels verbunden sind. Durch die Unterteilung des Rückführsystems in mehrere Leitkanäle wird die Stabilität des Rückführsystems verbessert.

Vorzugsweise weist das Rückführsystem Eintrittsöffnungen auf, die im Bodenbereich des Nutzfahrzeugaufbaus ausgebildet und den Leitkanälen zugeordnet sind.

Diese Anordnung hat den Vorteil, dass im Fall eines Kühlaggregates als Fördermittel die aus dem Nahbereich des Kühlaggregates zurückströmende Luft, die zwangsläufig etwas kälter ist, als die aus entfernteren Bereichen zurückströmende Luft an definierten Stellen, d.h. über die Eintrittsöffnungen angesaugt wird. Insbesondere wenn die Eintrittsöffnun-< gen im Bodenbereich des Nutzfahrzeugaufbaus angeordnet sind, wird sicher vermieden, dass das Kühlaggregat vereist.

Ein vertikaler Seitenbereich des Rückführsystems kann schräg angeordnet sein, wobei in dem Seitenbereich Eintrittsöffnungen ausgebildet sind. Durch die schräge Anordnung des vertikalen Seitenbereiches wird vermieden, dass die in diesem Bereich vorgesehenen Eintrittsöffnungen durch Frachtgut versehentlich verstellt bzw. verschlossen werden. Der Durchmesser der Eintrittsöffnungen des Seitenbereiches kann mit zunehmendem Abstand vom Luftverteiler größer werden.

Gemäß einem unabhängigen Aspekt ist ein Nutzfahrzeugaufbau mit einem Luft- oder Gasfördermittel vorgesehen, das einen Eintrittsbereich und einen Austrittsbereich aufweist, wobei dem Eintrittsbereich ein Rückführsystem vorgeordnet ist. Das Rückführsystem ist seitlich geschlossen und mit dem Eintrittsbereich dicht verbunden. Dieser gegen die DE 86 30 333 U1 abgegrenzte Nutzfahrzeugaufbau hat den Vorteil, dass durch die geschlossene Bauweise des Rückführsystems Ansaugverluste vermieden werden, so dass ein Großteil bzw. die gesamte angesaugte Rückluft dem Luft- oder Gasföidermittel zugeführt wird. Das vorstehend genannte Rückführsystem bietet also eine weitere Möglichkeit, die Luft- oder Gasführung des Nutzfahrzeugaufbaus mit möglichst geringen Strömungsverlusten durchzuführen. Insofern wird das vorstehend genannte Rückführsystem sowohl in Verbindung mit dem Luftverteiler als auch in unabhängiger Form beansprucht.

Nachfolgend wird die Erfindung anhand eines Ausführungsbeispieles mit weiteren Einzelheiten unter Bezug auf die beigefügten schematischen Zeichnungen erläutert.

In diesen zeigen:
- Fig. 1: eine perspektivische Ansicht eines Luftverteilers, der in einem Nutzfahrzeugaufbau nach einem erfindungsgemäßen Ausführungsbeispiel eingebaut ist;
- Fig. 2: eine Seitenansicht des Luftverteilers gemäß Fig. 1;
- Fig. 3: eine Draufsicht auf den Luftverteiler gemäß Fig. 1;
- Fig. 4: eine perspektivische Ansicht des Frachtraumes eines Nutzfahrzeugaufbaus mit einem Luftverteiler gemäß Fig. 1, wobei im Interesse der Übersichtlichkeit eine Seitenwand, die Rückwand und der Boden nicht dargestellt sind;
- Fig. 5: eine Seitenansicht des Frachtraumes gemäß Fig. 4;
- Fig. 6: eine Vorderansicht einer Vorderwand gemäß Fig. 4 mit einem Luftverteiler gemäß Fig. 1;
- Fig. 7: eine Seitenansicht der Vorderwand gemäß Fig. 5;
- Fig. 8: eine Draufsicht auf die Vorderwand gemäß Fig. 5;
- Fig. 9: eine perspektivische Ansicht gemäß Fig. 5;

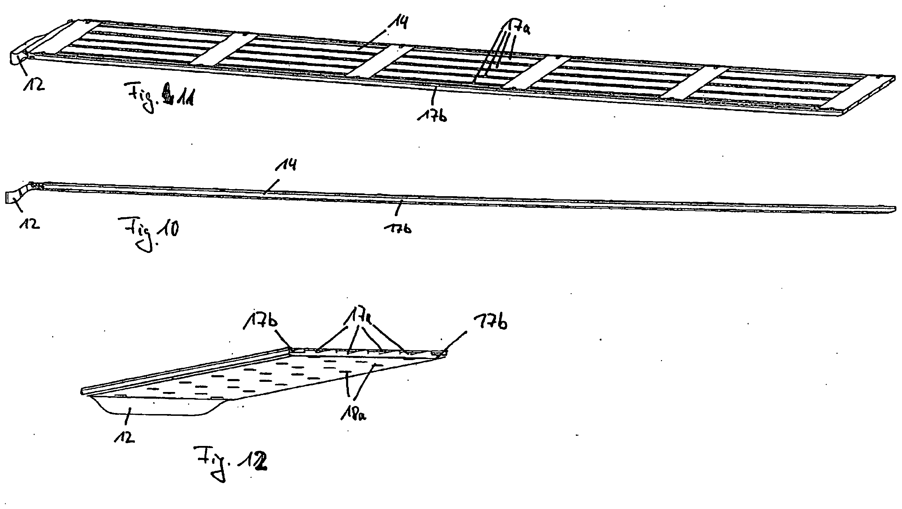

- Fig. 10: eine Seitenansicht des Luftverteilers gemäß Fig. 1 mit Luftaustrittseinrichtung;
- Fig. 11: eine perspektivische Ansicht des Luftverteilers gemäß Fig. 10 von schräg oben;
- Fig. 12: eine perspektivische Ansicht des Luftverteilers gemäß Fig. 10 von schräg unten; und
- Fig. 13: eine Ansicht des Frachtraums gemäß Fig. 5, wobei die Luftströmung im Frachtraum durch Pfeile verdeutlicht ist.

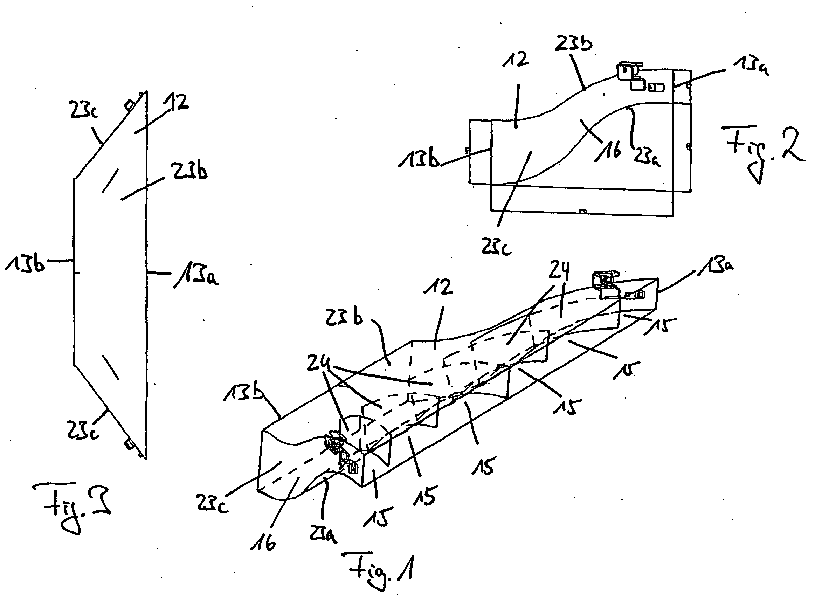

In den Figuren 1 - 3 ist ein Luftverteiler 12, bzw. eine Hutze, mit seinen wichtigsten Bauteilen dargestellt, der bei einem Nutzfahrzeugaufbau nach einem erfindungsgemäßen Ausführungsbeispiel zum Einsatz kommt. Der Luftverteiler 12 weist ein Gehäuse 23 mit einem Unterteil 23a, einem Oberteil 23b, sowie zwei Seitenteilen 23c auf. Das Gehäuse 23 kann aus Blech oder Kunststoff hergestellt sein. Die Stirnseiten des Gehäuses 23 sind geöffnet und bilden einen Einlassbereich 13b sowie einen Auslassbereich 13a, durch die Luft in den Luftverteiler 12 einströmen bzw. ausströmen kann.

Die Erfindung ist nicht auf die Führung bzw. Klimatisierung von Luft beschränkt, sondern kann auch generell zur Führung bzw. Klimatisierung von Gas verwendet werden, beispielsweise von Reifungsgasen für Früchte oder die Reifung verzögernde Gasen, beispielsweise Stickstoff. Die Erfindung erstreckt sich auch auf Nutzfahrzeugaufbauten, die anstelle eines Kühl- oder Wärmeaggregates andere Fördermittel, beispielsweise einen Ventilator verwenden, bei denen es auf eine Temperierung der Luft bzw. des Gases nicht ankommt. Generell kann aufgrund der verringerten Strömungsverluste eine verbesserte Verteilung des Mediums im Frachtraum erreicht werden, so dass die darin befindlichen Waren bzw. Güter gleichmäßig mit Luft bzw. Gas umspült werden.

Wie in Fig. 1 dargestellt, weist der Luftverteiler 12 mehrere Verteilerkanäle 15 auf. Die Verteilerkanäle 15 sind durch Stege 24 gebildet, die zwischen dem Unterteil 23a und dem Oberteil 23b des Gehäuses befestigt sind. Die Stege 24 und somit die Verteilerkanäle 15 sind im Luftverteiler 12 fächerartig angeordnet. Der Abstand zwischen benachbarten.Stegen 24 bzw. der Kanalquerschnitt ändert sich und nimmt im vorliegenden Beispiel in Strömungsrichtung, d.h. mit zunehmendem Abstand vom Kühlaggregat 10' zu.

Im vorliegenden Ausführungsbeispiel sind sechs Verteilerkanäle 15 vorgesehen. Eine andere Anzahl, beispielsweise drei, vier, fünf oder auch mehr als sechs Verteilerkanäle 15 ist möglich. Die Anzahl der Verteilerkanäle 15 kann sich nach der Breite des Aufbaus richten sowie nach der Anzahl der in den übrigen Figuren dargestellten Austrittskanälen 17a, 17b der Luftaustritteinrichtung 14, die sich an den Luftverteiler 12 anschließt.

Es ist möglich, die Verteilerkanäle, 15 nur im in Strömungsrichtung hinteren Bereich des Luftverteilers 12, insbesondere im Auslassbereich 13a anzuordnen. Der in Strömungsrichtung vordere Bereich des Luftverteilers 12, d.h. der Eintrittsbereich 13b kann im Interesse einer einfachen Konstruktion einbautenfrei sein. Das bedeutet, dass die vom Aggregat bzw. allgemein vom Fördermittel in den Luftverteiler 12 eingeblasene Luft gesammelt in den Einlassbereich 13b eintritt und im Auslassbereich 13a aufgrund der Verteilerkanäle 15 auf die unterschiedlichen Austrittskanäle 17a, 17b verteilt wird.

Um eine sichere und gleichmäßige Aufteilung des Luftstromes in mehrere Teilströme zu gewährleisten, sind die Verteilerkanäle 15 bis in den Einlassbereich 13b, konkret bis zur geöffneten einlassseitigen Stirnseite des Luftverteilers erstreckt. Diese Ausführung ist im Hinblick auf die Effizienz des Luftverteilers 12 besonders bevorzugt.

Im vorliegenden Ausführungsbeispiel sind die Verteilerkanäle 15 achssymetrisch angeordnet. Die achssymetrische Anordnung der Verteilkanäle 15 ist für ein Kühlaggregat 10' bzw. generell ein Fördermittel 10 vorgesehen, dessen Austrittsbereich 11b mittig in der Vorderwand 26 angeordnet ist. Daneben ist es auch möglich, die Verteilerkanäle 15 asymetrisch anzuordnen, beispielsweise indem die Verteilerkanäle im Einlassbereich 13b des Fördermittels 10 bezogen auf die Mittelachse des Luftverteilers 12 seitlich versetzt angeordnet sind. Daraus ergibt sich eine Anordnung der Verteilerkanäle 15, bei der die Verteilkanäle 15 im Auslassbereich 13a des Luftverteilers 12 achssymetrisch (wie in Figur 1) dargestellt) und im Einlassbereich 13b seitlich versetzt angeordnet sind (abweichend von Figur 1). Diese Ausführungsform des Luftverteilers 12 ist für Kühlaggregate 10' bzw. allgemein für Fördermittel 10 vorgesehen, deren Austrittsbereich 11b nicht mittig in der Vorderwand 26 angeordnet ist.

Generell wird die Position der Verteilerkanäle 15 im Einlassbereich 13b des Luftverteilers 12 an die Ortslage des Austrittsbereich 11b des Kühlaggregates 10' bzw. des Fördermittels 10 angepasst. Das bedeutet, dass der Abschnitt der fächerartig angeordneten Verteilerkanäle 15 mit kleinem Kanalquerschnitt, also der im Einlassbereich 13b des Luftverteilers 12 angeordnete Abschnitt der Verteilerkanäle 15 mittig oder seitlich versetzt bezogen auf die Mittellinie des Luftverteilers 12 angeordnet sein kann.

Dasselbe gilt für den Abschnitt der Verteilerkanäle 15 im Auslassbereich 13a des Luftverteilers 12, der im Interesse einer möglichst breiten Auffächerung des Luftstromes achssymetrisch bezogen auf die Mittellinie des Luftverteilers 12 angeordnet ist, wie in Figur 1 dargestellt. Daneben ist es auch denkbar, die Verteilerkanäle 15 im Auslassbereich 13a des Luftverteilers 12 auf einen bestimmten Teilbereich des Frachtraumes zu richten, so dass eine außermittige Anordnung der Verteilerkanäle 15 im Auslassbereich 13a des Luftverteilers 12 möglich ist.

Wie in den Figuren 1 und 3 zu erkennen, ist die horizontale Erstreckung des Luftverteilers 12 auslassseitig größer als die horizontale Erstreckung auf der Einlassseite. Dabei ist die Breite des Luftverteilers 12, d.h. dessen horizontale Erstreckung im Einlassbereich 13b an die Breite des Austrittsbereichs 11b des Fördermittels 10 bzw. des Aggregats 10' angepasst. Die Breite des Luftverteilers 12 im Auslassbereich 13a ist in etwa an die Breite des Aufbaus angepasst, zumindest jedoch breiter als die horizontale Erstreckung auf der Einlassseite. Damit wird die Voraussetzung geschaffen, dass die zentral vom Aggregat 10' in den Luftverteiler 12 eingespeiste Luft auf eine größere Breite verteilt wird, als dies bisher der Fall war, ohne dass es dabei zu Kühlverlusten kommt, da der Luftverteiler 12 ein seitlich geschlossenes Gehäuse 23 mit Verteilerkanälen 15 aufweist. In Fig. 1 ist in diesem Zusammenhang zu erkennen, dass die fächerartige Anordnung der Verteilerkanäle 15 an die Verbreiterung des Luftverteilers 12 in Strömungsrichtung angepasst ist.

In den Figuren 1 und 2 ist dargestellt, dass die vertikale Erstreckung, also die Höhe des Luftverteilers 12 auslassseitig kleiner ist als einlassseitig. Dabei ist die Höhe des Einlassbereiches 13b des Luftverteilers 12 in etwa an die Höhe des Austrittsbereichs 11b des Aggregats 10 angepasst. Die Höhe des Auslassbereichs 13a des Luftverteilers 12 ist an die Höhe der Luftaustrittseinrichtung 14, konkret die Höhe der Austrittskanäle 17a, 17b angepasst, die in den übrigen Figuren dargestellt sind. Durch die in Strömungsrichtung erfolgende vertikale Verengung des Luftverteilers 12 wird ein Düseneffekt erzeugt, der dazu beiträgt, dass die Kühlluft bzw. generell das zu verteilende Medium möglichst weit ins Innere des Frachtraums, insbesondere bis zur Rückwand gefördert wird.

In den Figuren 1 und 2 ist ferner dargestellt, dass der Luftverteiler 12 ein doppelt gekrümmtes Seitenprofil 16, insbesondere ein S-förmiges Seitenprofil 16 aufweist. Das bedeutet, dass das Unterteil 23a zwei im Querschnitt gegenläufige Krümmungen aufweist, also eine konvexe Biegung, an die sich eine konkave Biegung anschließt. Das Oberteil 23b ist entsprechend dem Unterteil 23a gekrümmt, allerdings mit kleineren Krümmungsradien, wodurch sich die unterschiedlichen Einlass- und Auslasshöhen ergeben. Die Kontur der Seitenteile 23c entspricht dem Querschnittsprofil des Unterteils 23a sowie des Oberteils 23b, so dass sich insgesamt für den Luftverteiler 12 ein Seitenprofil 16 mit doppelter Krümmung ergibt.

Das Seitenprofil 16 des Luftverteilers 12 ist dabei so ausgebildet, dass der Einlassbereich 13b im eingebauten Zustand tiefer als der Auslassbereich 13a angeordnet ist. Dadurch ergibt sich ein strömungstechnisch besonders günstiger Übergang vom Aggregat 10' auf die Luftaustrittseinrichtung 14, so dass die Luft vom Aggregat 10' zur Luftaustrittseinrichtung 14 mit geringen Reibungsverlusten geführt ist. Flachere oder steilere Krümmungen zur Anpassung an unterschiedliche Höhendifferenzen zwischen dem Aggregat 10' und der Luftaustrittseinrichtung 14 sind möglich.

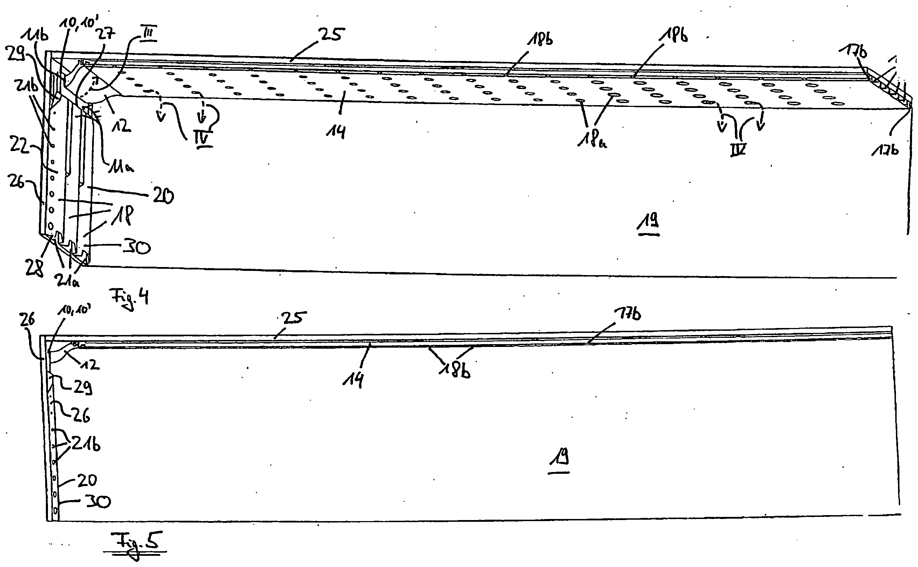

Fig. 4 stellt den Luftverteiler 12 gemäß den Figuren 1 - 3 im eingebauten Zustand dar. Dabei ist zu erkennen, dass der Luftverteiler 12 zwischen dem Kühlaggregat 10' und der Luftaustrittseinrichtung 14 angeordnet ist.

Der tiefer angeordnete Einlassbereich 13b des Luftverteilers 12 ist mit dem Austrittsbereich 11b des Kühlaggregats 10' verbunden. Der Auslassbereich 13a des Luftverteilers 12 ist mit der Luftaustrittseinrichtung 14 verbunden. Diese umfasst mehrere Austrittskanäle 17a, 17b. Im vorliegenden Beispiel sind sechs Austrittskanäle 17a, 17b entsprechend der Anzahl der Verteilerkanäle 15 vorgesehen. Eine andere Anzahl von Austrittskanälen 17a, 17b ist möglich, beispielsweise drei, vier oder fünf oder auch mehr als sechs Austrittskanäle 17a, 17b.

Die Austrittskanäle 17a, 17b sind als flexible Luftschläuche ausgebildet, die am Dach 25 des Aufbaus befestigt sind. Es ist auch möglich, anstelle der flexiblen Schläuche starre Austrittskanäle, beispielsweise Blechführungen zu verwenden.

In den Austrittskanälen 17a, 17b sind mehrere Austrittsöffnungen 18a, 18b angeordnet, deren Durchmesser mit zunehmendem Abstand vom Luftverteiler 12, d.h. in Strömungsrichtung größer wird. Durch die Austrittsöffnungen 18a, 18b sinkt die Kühlluft nach unten in den Frachtraum ab und umspült die darin befindlichen Güter. Die Luftaustrittseinrichtung 14 ist so aufgebaut, dass mehrere Austrittskanäle 17a, 17b im Wesentlichen in einer Ebene parallel zum Dach 25 nebeneinander angeordnet sind. Dabei sind mehrere innen angeordnete Austrittskanäle 17a zwischen seitlichen Austrittskanälen 17b angeordnet. Die innen angeordneten Austrittskanäle 17a sind breiter als die seitlich angeordneten Austrittskanäle 17b.

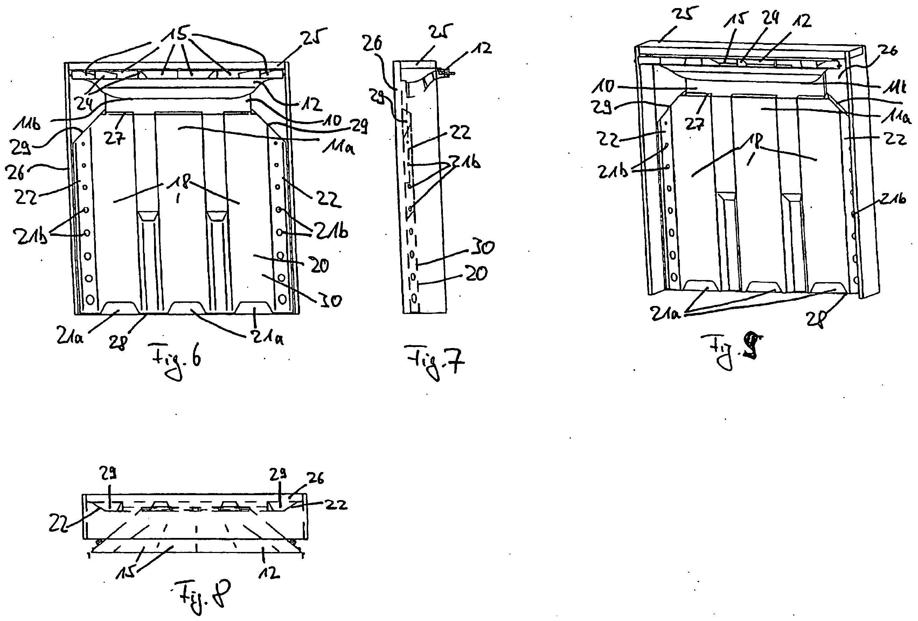

Die seitlichen Austrittskanäle 17b weisen überdies eine teilweise schräg ausgebildete Unterseite auf, wie insbesondere in Fig. 9 dargestellt. Die Unterseite ist zumindest teilweise, ausgehend von einer horizontalen Ebene, die durch die Unterseite der innen angeordneten Austrittskanäle 17a definiert ist, schräg nach oben zum Dach hin ausgebildet, so dass die darin vorgesehenen Austrittsöffnungen 18b ebenfalls schräg angeordnet sind. Dadurch ergibt sich eine nach außen gerichtete Strömung der aus den Austrittsöffnungen 18b austretenden Kühlluft in Richtung der Seitenwände.

Nachfolgend wird der Ansaugbereich des Kühlaggregates 10', also der dem Kühlaggregat 10' in Strömungsrichtung vorgeordnete Bereich erläutert.

Im Ansaugbereich des Kühlaggregates 10' bzw. des Fördermittels 10 ist ein Rückführsystem 30 vorgesehen, das seitlich geschlossen und mit dem Eintrittsbereich 11a des Kühlaggregates 10' bzw. des Fördermittels 10 dicht verbunden ist.

Das Rückführsystem weist im Wesentlichen senkrecht angeordnete Leitkanäle 18 auf, die in oder an der Vorderwand 26 ausgebildet und dem Eintrittsbereich 11a des Kühl- bzw. Wärmeaggregates 10 vorgeordnet sind. Die Leitkanäle können entweder in die Vorderwand 26 integriert oder auf dieser aufgesetzt sein. Im letzteren Fall sind die Leitkanäle durch Hutprofile oder Z-Profile ausgebildet, die an der Vorderwand befestigt, beispielsweise mit dieser verschraubt sind. Die Leitkanäle 18 sind mit dem Kühlaggregat 10 verbunden, wobei die zu kühlende Luft bzw. das zu kühlende Medium durch die Leitkanäle 18 dem Kühlaggregat 10 über dessen Eintrittsbereich 11a zugeführt wird. Die Leitkanäle 18 sind zum Frachtraum 19 hin durch eine Platte 20 bzw. allgemein durch wenigstens ein Plattenelement begrenzt, in der bzw. dem Eintrittsöffnungen 21a ausgebildet sind, die mit den Leitkanälen 18 verbunden sind. Die Platte 20 ist mit den Hutprofilen bzw. Z-Profilen fest verbunden und somit von der Vorderwand 26 beabstandet. Durch die Ausbildung mehrerer Leitkanäle 18, die durch die Hutprofile bzw. Z-Profile begrenzt sind, wird eine stabile und robuste Wandkonstruktion geschaffen, die der Belastung durch Frachtgüter Stand hält.

Die Platte 20 bildet zusammen mit den Leitkanälen 18 und der Vorderwand 26 ein dicht abgeschlossenes Rückführsystem 30, das mit dem Kühlaggregat 10 bzw. dem Fördermittel dicht verbunden ist. Die Rückluft wird daher im Wesentlichen verlustfrei aus dem Frachtraum über das Rückführsystem dem Kühlaggregat 10 zugeführt.

Die Platte 20 bedeckt den gesamten Ansaugbereich und ist gegen das Aggregat 10' abgedichtet, so dass die zu kühlende Luft ausschließlich über die Eintrittsöffnungen 21a in der Platte 20 angesaugt wird. Die Eintrittsöffnungen 21a sind dabei im Bodenbereich des Aufbaus angeordnet, konkret an der Unterkante 28 der Platte 20. Die Seiten der Platte 20 sind abgewinkelt und bilden jeweils einen vertikalen Seitenbereich 22, der schräg angeordnet ist. Der Seitenbereich 22 erstreckt sich ausgehend von der durch die Platte 20 bestimmten vertikalen Ebene schräg nach vorne zur Vorderwand 26 hin und schließt mit dieser dicht ab. Im Seitenbereich 22 sind weitere Eintrittöffnungen 21b ausgebildet, die vertikal in einer Reihe angeordnet sind, wobei der Durchmesser der Eintrittsöffnungen 21b mit zunehmendem Abstand vom Luftverteiler 12 größer wird. Zwischen der Oberkante 27 der Platte 20 und den vertikalen Seitenbereichen 22 ist ein abgewinkelter Übergangsbereich 29 angeordnet, der sich zum Kühlaggregat 10' hin verjüngt. Der Übergangsbereich 29 liegt dicht an der Vorderwand 26 an und verbindet den vertikalen Seitenbereich 22 mit dem Eintrittsbereich 11a des Kühlaggregats 10'. Dadurch ist die Platte 20 bzw. das dadurch gebildete Rückführsystem 30 nach oben hin dicht geschlossen, so dass weder Rückluft entweichen noch Kaltluft nachströmen kann.

Die Eintrittsöffnungen 21b im Seitenbereich 22 des Rückführsystems 30 dienen zur Ansaugung von Rückluft im Bereich der Seitenwände des Aufbaues, wobei durch den mit zunehmendem Abstand vom Kühlaggregat 10' größer werdenden Durchmesser die Eintrittsöffnungen 21b sichergestellt wird, dass eine größere Menge an Rückluft in Bodennähe als in Nähe des Kühlaggregates 10' angesaugt wird. Dadurch wird das Zurückströmen der Rückluft entlang der Seitenwände des Aufbaus begünstigt, ohne dass dabei größere Mengen an kalter Rückluft aus dem oberen Bereich des Frachtraumes angesaugt werden.

Um das Rückführsystems 30 an unterschiedlichen Aufbauhöhen anzupassen, kann die Platte 20 teleskopierbar ausgebildet sein. Dazu kann die Platte 20 in horizontaler Richtung zweigeteilt sein und zwei oder mehr Plattenelemente umfassen. Die beiden Plattenelemente überlappen vertikal, wobei das höher angeordnete Plattenelement entsprechend der jeweiligen Aufbauhöhe so angeordnet wird, dass der komplette Ansaugbereich überdeckt und das Rückführsystem 30 dicht mit dem Einsatzbereich 11a des Kühlaggregates 10' bzw. des Fördermittels 10 abdichtet. Der Grad der Überlappung richtet sich nach der maximalen Aufbauhöhe, die mit dem System ausgestattet werden soll.

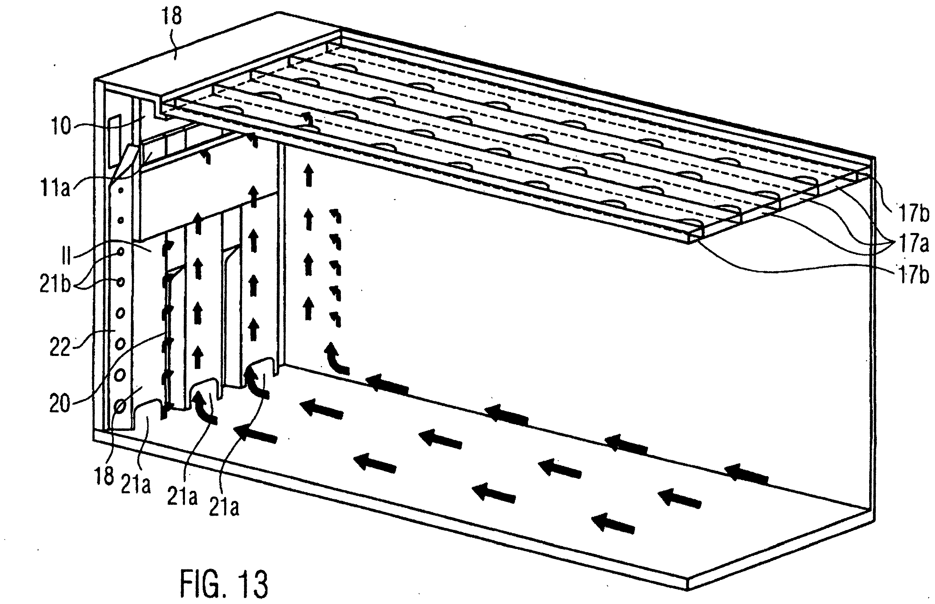

Die Funktionsweise des vorstehend beschriebenen Nutzfahrzeugaufbaus wird unter Bezug auf die Fig. 13 näher erläutert.

Wie anhand der Pfeile I zu erkennen, wird die im Frachtraum befindliche Luft in Bodennähe durch die Eintrittsöffnungen 21a in der Platte 20 angesaugt und steigt hinter der Platte 20 durch die Leitkanäle 18 nach oben bis zum Eintrittsbereich 11a des Kühlaggregats 10'. Zusätzlich wird die Luft seitlich durch die vertikalen und schräg angeordneten weiteren Eintrittsöffnungen 21b des Seitenbereichs 22 der Platte 20 angesaugt, wie durch die Pfeile II dargestellt. Die seitlich angesaugt Luft wird ebenfalls über die Leitkanäle 18 nach oben zum Kühlaggregat 10' geleitet. Wie in Fig. 4 dargestellt, tritt die gekühlte Luft aus dem Aggregat 10' aus und in den Luftverteiler 12 ein (Pfeile III). Im Luftverteiler 12 wird die Kühlluft durch die Verteilerkanäle 15 auf die verschiedenen Austrittskanäle 17a, 17b verteilt und sinkt dann sukzessive durch die Austrittsöffnungen 18a, 18b nach unten in den Frachtraum ab (Pfeile IV). In Bodennähe wird die Kühlluft wieder angesaugt (Fig. 13), so dass sich insgesamt ein Kühlluftkreislauf bildet.

Insgesamt bietet das vorstehend erläuterte Ausführungsbeispiel den Vorteil, dass die vom Kühlaggregat 10' geförderte Kühlluft gleichmäßig auf nebeneinander angeordnete verschiedene Austrittskanäle 18a, 18b verteilt wird, ohne dass es dabei zu nennenswerten Strömungsverlusten kommt. Dazu dient der Luftverteiler 12, insbesondere die im Luftverteiler 12 angeordneten Verteilerkanäle 15. Ein weiterer besonderer Vorteil der Erfindung ergibt sich durch die Kombination dieses Luftverteilers 12 mit dem nach oben abgedichteten und seitlich geschlossenen Rückführsystem 30. Insbesondere durch die Anordnung der Eintrittsöffnungen 21a im Bodenbereich der Platte 20 wird die Ausbildung eines Kühlluftkreislaufes bzw. einer Kühlluftzirkulation im Frachtraum begünstigt und ein Vereisen des Aggregats verhindert. Das vorstehend genannte Rückführsystem 30 kann auch unabhängig vom Luftverteiler 12 verwendet werden.

Die Erfindung kann auch auf Nutzfahrzeugaufbauten angewandt werden, die ein Luft- bzw. Gasfördermittel ohne Klimatisierungsfunktion, beispielsweise einen Ventilator zur Ausbildung einer Luftströmung im Frachtraum aufweisen. Derartige Ausführungen sind von der Erfindung mit umfasst.

Neben dem vorstehend beschriebenen geschlossenen Kreislauf kann die Erfindung auch bei offenen Systemen eingesetzt werden, bei denen das in den Frachtraum eingeblasene Medium, beispielsweise Stickstoff als Antireifungsgas oder Heizluft nicht rückgeführt, sondern abgelassen wird.

Ferner wird ein Nutzfahrzeug mit einem vorstehend beschriebenen Aufbau beansprucht.

### Bezugszeichenliste

- 10: Luft- oder Gasfördermittel
- 10': Kühlaggregat
- 11a: Eintrittsbereich
- 11b: Austrittsbereich
- 12: Luftverteiler
- 13a: Auslassbereich
- 13b: Einlassbereich
- 14: Luftaustrittseinrichtung
- 15: Verteilerkanäle
- 16: Seitenprofil
- 17a, 17b: Austrittskanäle
- 18: Leitkanäle
- 18a, 18b: Austrittsöffnungen
- 19: Frachtraum
- 20: Platte
- 21a, 21b: Eintrittsöffnungen
- 22: Seitenbereich
- 23: Gehäuse
- 23a: Unterteil
- 23b: Oberteil
- 23c: Seitenteile
- 24: Stege
- 25: Dach
- 26: Vorderwand
- 27: Oberkante der Platte
- 28: Unterkante der Platte
- 29: Übergangsbereich
- 30: Rückführsystem

## Patentansprüche

1. Nutzfahrzeugaufbau mit einem Luft- oder Gasfördermittel (10), das einen Eintrittsbereich (11a) und einen Austrittsbereich (11b) aufweist, wobei dem Austrittsbereich (11b) ein Luftverteiler (12) und diesem eine im Bereich des Daches (25) vorgesehene Luftaustrittseinrichtung (14) nachgeordnet ist, wobei der Luftverteiler (12) mehrere Verteilerkanäle (15) aufweist, die mit der Luftaustrittseinrichtung (14) verbunden sind,
**dadurch gekennzeichnet, dass**
die Verteilerkanäle (15) fächerartig im Luftverteiler (12) angeordnet sind, wobei der Eintrittsbereich (11a) des Luft- oder Gasfördermittels (10) mit einem Rückführsystem (30) dicht verbunden ist, das seitlich geschlossen ist und mehrere im wesentlichen senkrecht angeordnete Leitkanäle (18) aufweist, die mit dem Eintrittsbereich (11a) des Luft- oder Gasfördermittels (10) verbunden sind.

2. Nutzfahrzeugaufbau nach Anspruch 1
**dadurch gekennzeichnet, dass**
die Verteilerkanäle (15) wenigstens in einem Auslassbereich (13a) des Luftverteilers (12) angeordnet sind.

3. Nutzfahrzeugaufbau nach wenigstens einem der Ansprüche 1 oder 2,
**dadurch gekennzeichnet, dass**
ein Einlassbereich (13b) des Luftverteilers (12) einbautenfrei ist.

4. Nutzfahrzeugaufbau nach wenigstens einem der vorherigen Ansprüche,
**dadurch gekennzeichnet, dass**
die horizontale Erstreckung des Luftverteilers (12) auslassseitig größer ist als einlassseitig.

5. Nutzfahrzeugaufbau nach wenigstens einem der vorherigen Ansprüche,
**dadurch gekennzeichnet, dass**
die vertikale Erstreckung des Luftverteilers (12) auslassseitig kleiner ist als einlassseitig.

6. Nutzfahrzeugaufbau nach wenigstens einem der vorherigen Ansprüche,
**dadurch gekennzeichnet, dass**
der Luftverteiler (12) ein doppelt gekrümmtes Seitenprofil (16) aufweist.

7. Nutzfahrzeugaufbau nach wenigstens einem der vorherigen Ansprüche,
**dadurch gekennzeichnet, dass**
die Luftaustrittseinrichtung (14) mehrere Austrittskanäle (17a, 17b) mit Austrittsöffnungen (18a, 18b) aufweist, wobei die Austrittsöffnungen (18b) in den seitlichen Austrittskanälen (17b) schräg angeordnet sind.

8. Nutzfahrzeugaufbau nach wenigstens einem der vorherigen Ansprüche,
**dadurch gekennzeichnet, dass**
der Durchmesser der Austrittsöffnungen (18a, 18b) mit zunehmendem Abstand vom Luftverteiler (12) steigt.

9. Nutzfahrzeugaufbau nach Anspruch 8,
**dadurch gekennzeichnet, dass**
das Rückführsystem (30) Eintrittsöffnungen (21a) aufweist, die im Bodenbereich des Nutzfahrzeugaufbaus ausgebildet und den Leitkanälen (18) zugeordnet sind.

10. Nutzfahrzeugaufbau nach wenigstens einem der vorherigen Ansprüche,
**dadurch gekennzeichnet, dass**
ein vertikaler Seitenbereich (22) des Rückführsystems (30) schräg angeordnet ist, wobei in dem Seitenbereich (22) Eintrittsöffnungen (21b) ausgebildet sind.

11. Nutzfahrzeugaufbau nach Anspruch 10,
**dadurch gekennzeichnet, dass**
der Durchmesser der Eintrittsöffnungen (21b) im Seitenbereich (22) mit zunehmendem Abstand vom Luftverteiler (12) steigt.

12. Nutzfahrzeug mit einem Nutzfahrzeugaufbau nach wenigstens einem der vorhergehenden Ansprüche.

## Claims

1. A utility vehicle superstructure with an air or gas delivery means (10), which comprises an inflow region (11a) and an outflow region (11b), wherein downstream of the outflow region (11b) an air diffuser (12) and downstream of the same an air outflow device (14) provided in the region of the roof (25) is arranged, wherein the air diffuser (12) comprises multiple diffuser ducts (15), which are connected to the air outflow device (14), **characterized in that** the diffuser ducts (15) are arranged fan-like in the air diffuser (12), wherein the inlet region (11a) of the air or gas delivery means (10) is tightly connected to a recirculation system (30), which is laterally closed and comprises multiple guiding ducts (18) which are substantially arranged perpendicularly, and which are connected to the inflow region (11a) of the air or gas delivery means (10).

2. The utility vehicle superstructure according to Claim 1, **characterized in that** the diffuser ducts (15) are arranged at least in an outlet region (13a) of the air diffuser (12).

3. The utility vehicle superstructure according to at least one of the Claims 1 or 2, **characterized in that** an inlet region (13b) of the air diffuser (12) is free of installations.

4. The utility vehicle superstructure according to at least one of the preceding claims, **characterized in that** the horizontal extent of the air diffuser (12) is greater on the outlet side than on the inlet side.

5. The utility vehicle superstructure according to at least one of the preceding claims, **characterized in that** the vertical extent of the air diffuser (12) is smaller on the outlet side than on the inlet side.

6. The utility vehicle superstructure according to at least one of the preceding claims, **characterized in that** the air distributor (12) comprises a double-curved side profile (16).

7. The utility vehicle superstructure according to at least one of the preceding claims, **characterized in that** the air outlet device (14) comprises multiple outlet ducts (17a, 17b) with outlet openings (18a, 18b), wherein the outlet openings (18b) are arranged obliquely in the lateral outlet ducts (17b).

8. The utility vehicle superstructure according to at least one of the preceding claims, **characterized in that** the diameter of the outlet openings (18a, 18b) increases with increasing distance from the air diffuser (12).

9. The utility vehicle superstructure according to Claim 8, **characterized in that** the recirculation system (30) comprises inlet openings (21a), which are formed in the floor region of the utility vehicle superstructure and assigned to the guiding ducts (18).

10. The utility vehicle superstructure according to at least one of the preceding claims, **characterized in that** a vertical lateral region (22) of the recirculation system (30) is arranged obliquely, wherein in the lateral region (22) inlet openings (21b) are formed.

11. The utility vehicle superstructure according to Claim 10, **characterized in that** the diameter of the inlet openings (21b) in the lateral region (22) increases with increasing distance from the air diffuser (12).

12. A utility vehicle with a utility vehicle superstructure according to at least one of the preceding claims.

## Revendications

1. Structure de véhicule utilitaire comportant un moyen de brassage d'air ou de gaz (10), qui présente une zone d'entrée (11a) et une zone de sortie (11b), dans laquelle un distributeur d'air (12) est disposé en aval de la zone de sortie (11b) et un dispositif de sortie d'air (14) prévu au niveau du toit (25) est disposé en aval dudit distributeur, dans lequel le distributeur d'air (12) présente plusieurs canaux de distribution (15), qui sont reliés avec le dispositif de sortie d'air (14), **caractérisée en ce que** les canaux de distributeur (15) sont disposés en forme d'éventail dans le distributeur d'air (12), dans lequel la zone d'entrée (11a) du moyen de brassage d'air ou de gaz (10) est reliée de manière étanche avec un système de réintroduction (30), qui est fermé latéralement et est présente plusieurs canaux directeurs (18), qui sont reliés avec la zone d'entrée (11a) du moyen de brassage d'air ou de gaz (10).

2. Structure de véhicule utilitaire selon la revendication 1,
**caractérisée en ce que**
les canaux de distributeur (15) sont disposés au moins dans une zone d'échappement (13a) du distributeur d'air (12).

3. Structure de véhicule utilitaire selon au moins une des revendications 1 ou 2,
**caractérisée en ce**
**qu'**une zone d'admission (13b) du distributeur d'air (12) est exempte d'inserts.

4. Structure de véhicule utilitaire selon au moins une des revendications précédentes,
**caractérisée en ce que**
l'extension horizontale du distributeur d'air (12) est plus grande du côté d'échappement que du côté d'admission.

5. Structure de véhicule utilitaire selon au moins une des revendications précédentes,
**caractérisée en ce que**
l'extension verticale du distributeur d'air (12) est plus petite du côté d'échappement que du côté d'admission.

6. Structure de véhicule utilitaire selon au moins une des revendications précédentes,
**caractérisée en ce que**
le distributeur d'air (12) présente un profilé latéral double recourbé (16).

7. Structure de véhicule utilitaire selon au moins une des revendications précédentes,
**caractérisée en ce que**
le dispositif de sortie d'air (14) présente plusieurs canaux de sortie (17a, 17b) pourvus d'ouvertures de sortie (18a, 18b), dans laquelle les ouvertures de sortie (18b) sont disposées en oblique dans les canaux de sortie latéraux (17b).

8. Structure de véhicule utilitaire selon au moins une des revendications précédentes,
**caractérisée en ce que**
le diamètre des ouvertures de sortie (18a, 18b) augmente proportionnellement à l'écart par rapport au distributeur d'air (12).

9. Structure de véhicule utilitaire selon la revendication 8,
**caractérisée en ce que**
le système de réintroduction (30) présente des ouvertures d'entrée (21a), qui sont réalisés dans la zone de base du véhicule utilitaire et sont affectées aux canaux directeurs (18).

10. Structure de véhicule utilitaire selon au moins une des revendications précédentes,
**caractérisée en ce que**
qu'une zone latérale verticale (22) du système de réintroduction (30) est disposée en oblique, dans laquelle dans la zone latérale (22) des ouvertures d'entrée (21b) sont réalisées.

11. Structure de véhicule utilitaire selon la revendication 10,
**caractérisée en ce que**
le diamètre des ouvertures d'entrée (21b) dans la zone latérale (22) augmente proportionnellement à l'écart par rapport au distributeur d'air (12).

12. Véhicule utilitaire comportant une structure de véhicule utilitaire selon au moins une des revendications précédentes.
